# EUROPEAN PATENT APPLICATION

(11) **EP 4 629 708 A2**
(43) Date of publication of application: **08.10.2025**
(21) Application number: 25198233.6
(22) Date of filing: 10.01.2023
(51) Int. Cl.: H04W 52/14

(54) **DEVICES AND METHODS REDUCING ADDITIONAL MAXIMUM POWER REDUCTION FOR A BANDWIDTH PART WITH AN ADDITIONAL EMISSIONS PARAMETER**

(30) Priority: 10.01.2022 US 202263298005 P
(62) Divisional of application: 23700563.2
(71) Applicant: Lenovo (Singapore) Pte. Ltd., New Tech Park 556741 (SG)
(72) Inventor: FRANK, Colin, Park Ridge, 60068 (US)
(74) Representative: Openshaw & Co.

(57) **Abstract**

Various aspects of the present disclosure relate to reducing adjusted maximum power reduction (A-MPR) that is applied by a user equipment (UE) as part of wireless communication. For instance, as part of wireless communication between a base station and a UE, the base station communicates to the UE wireless resources such as a first carrier bandwidth, an identifier for a location of a bandwidth part within the first carrier bandwidth, and a resource block allocation within the bandwidth part. The UE identifies a second carrier bandwidth within the first carrier bandwidth that includes the bandwidth part and a value for A-MPR. The UE then applies power reduction for wireless transmission over the bandwidth part based on the A-MPR value, such as power reduction that is less than or equal to the A-MPR value.

## Description

### RELATED APPLICATION

This application claims priority to U.S. Provisional Patent Application Serial No. 63/298,005, filed January 10, 2022, titled "Reducing Additional Maximum Power Reduction for a Bandwidth Part with an Additional Emissions Parameter," the disclosure of which is incorporated by reference herein in its entirety.

### TECHNICAL FIELD

The present disclosure relates to wireless communications, and more specifically to reducing power reduction as part of satisfying emissions parameters in wireless communication.

### BACKGROUND

A wireless communications system may include one or multiple network communication devices, such as base stations, which may be otherwise known as an eNodeB (eNB), a next-generation NodeB (gNB), or other suitable terminology. Each network communication device, such as a base station, may support wireless communications for one or multiple user communication devices, which may be otherwise known as user equipment (UE), or other suitable terminology. The wireless communications system may support wireless communications with one or multiple user communication devices by utilizing resources of the wireless communications system, such as time resources (e.g., symbols, subslots, slots, subframes, frames, or the like) or frequency resources (e.g., subcarriers, carriers). Additionally, the wireless communications system may support wireless communications across various radio access technologies including third generation (3G) radio access technology, fourth generation (4G) radio access technology, fifth generation (5G) radio access technology, and other suitable radio access technologies beyond 5G.

As part of wireless transmission from a UE, channel leakage and spurious emissions into adjacent channels can occur that result in interference with adjacent channels. Accordingly, emissions parameters have been defined that are intended to reduce such interference. Examples of such emissions parameters include spectral emissions mask (SEM), adjacent channel leakage ratio (ACLR), and spurious emissions. In addition, there may be network-signaled emissions parameters that depend on the location of the local oscillator (LO) frequency of a UE. To enable a UE to comply with such emissions parameters, maximum power reduction (MPR) and additional maximum power reduction (A-MPR) values have been determined that enable a UE to reduce transmission power when transmitting on the uplink, which contributes to compliance with specified emissions parameters.

### SUMMARY

The present disclosure relates to methods, apparatuses, and systems that support reducing A-MPR for a bandwidth part with an additional emissions parameter. By utilizing the described techniques, power reduction values for A-MPR may be reduced and thus signal power increased while meeting emissions parameters (e.g., emissions constraints) as part of wireless communication between a UE and a wireless network.

Some implementations of the methods and apparatuses described herein may include receiving, at a first device and from a second device, an identifier for a first carrier bandwidth, an identifier for a location of a bandwidth part within the first carrier bandwidth, and a resource block allocation within the bandwidth part. A second carrier bandwidth is identified within the first carrier bandwidth, where the second carrier bandwidth includes the bandwidth part and a value for A-MPR for resource block allocations within the bandwidth part. For a transmission over the resource block allocation, a power reduction is applied that is less than or equal to the value for the A-MPR associated with the second carrier bandwidth.

Some implementations of the methods and apparatuses described herein may include determining at a first device, based on a location of a local oscillator frequency of a second device, a first carrier bandwidth within a second, larger carrier bandwidth, where the first carrier bandwidth includes a value for A-MPR. One or more notifications are generated that identify the first carrier bandwidth, the second carrier bandwidth, a bandwidth part within the first carrier bandwidth, and a resource block allocation within the bandwidth part. The one or more notifications are communicated from the first device to the second device for configuring wireless communication between the first device and the second device.

### BRIEF DESCRIPTION OF THE DRAWINGS

Various aspects of the present disclosure for reducing A-MPR for a bandwidth part with an emissions parameter are described with reference to the following Figures. The same numbers may be used throughout to reference like features and components shown in the Figures.
FIG. 1 illustrates an example of a wireless communications system that supports reducing A-MPR for a bandwidth part with an emissions parameter in accordance with aspects of the present disclosure.
FIG. 2a depicts an implementation where a bandwidth part is positioned against an edge of a large carrier bandwidth in accordance with aspects of the present disclosure.
FIG. 2b depicts an implementation where a bandwidth part is positioned away from the edge of a large carrier in accordance with aspects of the present disclosure.
FIGS. 3-5 depict an example scenario for reducing A-MPR for a bandwidth part with an emissions parameter in accordance with aspects of the present disclosure.
FIG. 6 illustrates an example of a block diagram of a device that supports reducing A-MPR for a bandwidth part with an additional emissions parameter in accordance with aspects of the present disclosure.
FIG. 7 illustrates an example of a block diagram of a device that supports reducing A-MPR for a bandwidth part with an additional emissions parameter in accordance with aspects of the present disclosure.
FIGS. 8-12 illustrate flowcharts of methods that support reducing A-MPR for a bandwidth part with an additional emissions parameter in accordance with aspects of the present disclosure.

### DETAILED DESCRIPTION

Implementations of reducing A-MPR for a bandwidth part with an additional emissions parameter are described, such as related to enabling a UE to reduce the amount of power reduction that is applied on uplink transmission to satisfy emissions parameters such as SEM, ACLR, spurious emissions, and so forth.

Some wireless communications systems utilize standard MPR and A-MPR values for applying A-MPR to satisfy emissions parameters. This can result in over-application of power reduction which can reduce uplink signal power.

Accordingly, to overcome such deficiencies in some wireless communications systems, this disclosure introduces techniques for reducing A-MPR for a bandwidth part with an emissions parameter. An emissions parameter, for example, represents an emissions requirement and/or an emissions constraint for wireless transmission. By utilizing reduced A-MPR as compared with other wireless systems, the UE can experience increased signal quality in comparison with some A-MPR techniques. For instance, for a channel resource provided by a wireless network that includes a first carrier and a bandwidth part within the first carrier, a UE identifies a second carrier within the first carrier that includes the bandwidth part and has a minimum A-MPR value, e.g., a smallest A-MPR value from among available carrier bandwidths. The UE can then apply the minimum A-MPR value (or no A-MPR at all, if specified) as part of wireless transmission, e.g., uplink transmission to the wireless network. In order for the reduced A-MPR to apply, the transmit filter corresponding to the second carrier may be used. Thus, by reducing A-MPR that is applied, signal transmission quality is increased while satisfying emissions parameters.

Aspects of the present disclosure are described in the context of a wireless communications system. Aspects of the present disclosure are further illustrated and described with reference to device diagrams and flowcharts that relate to reducing A-MPR for a bandwidth part with an additional emissions parameter.

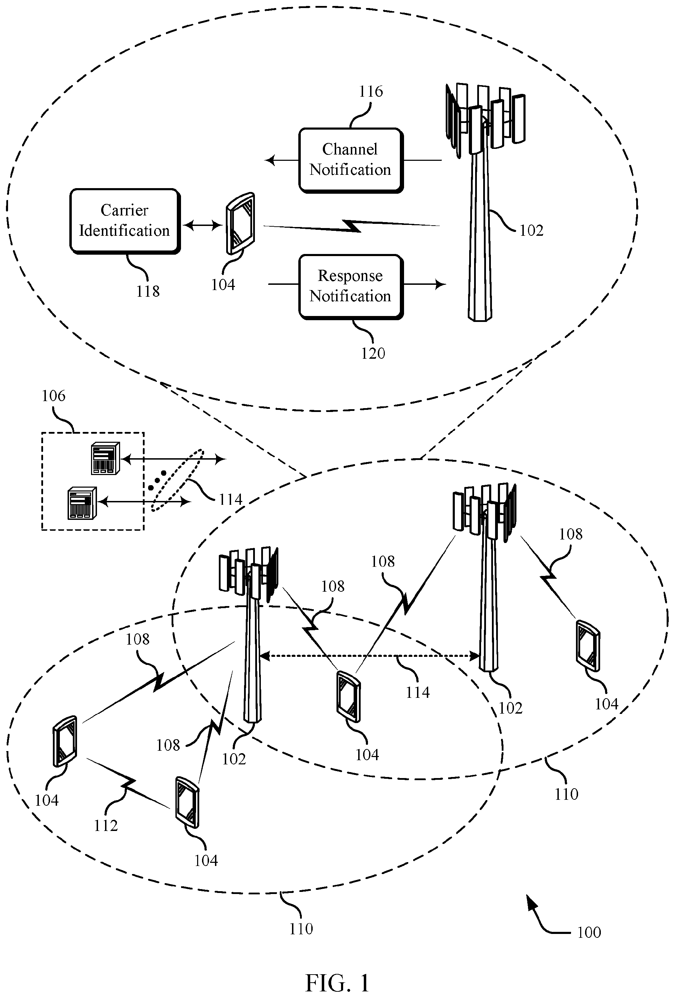

**FIG. 1** illustrates an example of a wireless communications system 100 that supports reducing A-MPR for a bandwidth part with an additional emissions parameter in accordance with aspects of the present disclosure. The wireless communications system 100 may include one or more base stations 102, one or more UEs 104, and a core network 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as an NR network. In other implementations, the wireless communications system 100 may be a combination of a 4G network and a 5G network. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more base stations 102 may be dispersed throughout a geographic region to form the wireless communications system 100. One or more of the base stations 102 described herein may be or include or may be referred to as a base transceiver station, an access point, a NodeB, an eNodeB (eNB), a next-generation NodeB (gNB), a Radio Head (RH), a relay node, an integrated access and backhaul (IAB) node, or other suitable terminology. A base station 102 and a UE 104 may communicate via a communication link 108, which may be a wireless or wired connection. For example, a base station 102 and a UE 104 may perform wireless communication over a Uu interface.

A base station 102 may provide a geographic coverage area 110 for which the base station 102 may support services (e.g., voice, video, packet data, messaging, broadcast, etc.) for one or more UEs 104 within the geographic coverage area 110. For example, a base station 102 and a UE 104 may support wireless communication of signals related to services (e.g., voice, video, packet data, messaging, broadcast, etc.) according to one or multiple radio access technologies. In some implementations, a base station 102 may be moveable, for example, a satellite associated with a non-terrestrial network. In some implementations, different geographic coverage areas 110 associated with the same or different radio access technologies may overlap, but the different geographic coverage areas 110 may be associated with different base stations 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region of the wireless communications system 100. A UE 104 may include or may be referred to as a mobile device, a wireless device, a remote device, a handheld device, a customer premise equipment (CPE), or a subscriber device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples. In some implementations, a UE 104 may be stationary in the wireless communications system 100. In some other implementations, a UE 104 may be mobile in the wireless communications system 100.

The one or more UEs 104 may be devices in different forms or having different capabilities. Some examples of UEs 104 are illustrated in FIG. 1. A UE 104 may be capable of communicating with various types of devices, such as the base stations 102, other UEs 104, or network equipment (e.g., the core network 106, a relay device, an integrated access and backhaul (IAB) node, or another network equipment), as shown in FIG. 1. Additionally, or alternatively, a UE 104 may support communication with other base stations 102 or UEs 104, which may act as relays in the wireless communications system 100.

A UE 104 may also be able to support wireless communication directly with other UEs 104 over a communication link 112. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 112 may be referred to as a sidelink. For example, a UE 104 may support wireless communication directly with another UE 104 over a PC5 interface.

A base station 102 may support communications with the core network 106, or with another base station 102, or both. For example, a base station 102 may interface with the core network 106 through one or more backhaul links 114 (e.g., via an S1, N2, N2, or another network interface). The base stations 102 may communicate with each other over the backhaul links 114 (e.g., via an X2, Xn, or another network interface). In some implementations, the base stations 102 may communicate with each other directly (e.g., between the base stations 102). In some other implementations, the base stations 102 may communicate with each other indirectly (e.g., via the core network 106). In some implementations, one or more base stations 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management for the one or more UEs 104 served by the one or more base stations 102 associated with the core network 106.

According to implementations for reducing A-MPR for a bandwidth part with an additional emissions parameter, a base station 102 can communicate a channel notification 116 that includes various information such as an identifier associated with a first carrier bandwidth, an identifier for a location of a bandwidth part within the first carrier bandwidth, and a resource block allocation within the bandwidth part. In at least one implementation the channel notification 116 includes an emission parameter associated with the base station 102. A UE 104 receives the channel notification 116 and performs a carrier identification 118 to identify a second carrier bandwidth within the first carrier bandwidth, where the second carrier bandwidth includes the bandwidth part and a value for A-MPR. For example, where the channel notification 116 includes an emission parameter, the carrier identification 118 determines whether the UE 104 is able to apply A-MPR to satisfy the emission parameter for the bandwidth part. Accordingly, the UE 104 generates a response notification 120 to the base station 102 that indicates whether the UE 104 is able to satisfy an emission parameter for a bandwidth part signaled as part of the channel notification 116.

For enabling compliance with emissions parameters in wireless communications systems, the location of the LO is important when evaluating the MPR/A-MPR that is needed to meet emissions requirements. The location of the LO is particularly important when evaluating the A-MPR needed to meet emissions parameters at the edge of a carrier band where additional network signaled (NS) emissions requirements may apply in addition to general emissions requirements. Previously, MPR/A-MPR determinations have been done with the assumption that the LO is located in the center of the carrier bandwidth. As a result, in conventional systems it is not clear if the MPR/A-MPR that applies when the LO is located in the center of the carrier bandwidth is sufficient to meet the emissions requirements when the LO is placed in a location other than this. Additionally, in order for a gNB to suppress the LO when processing and demodulating the signal received from a UE, the location of the LO is to be known to the gNB. For LTE, it was assumed that the LO location was in the center of the carrier bandwidth, but for NR the LO location is signaled by the UE unless it is in the default location. If bandwidth parts are not used, the default LO location is in the center of the carrier bandwidth. If bandwidth parts are used, the default LO location may be either in the center of the configured bandwidth parts or in the center of the activated bandwidth parts, which may be equal to or a subset of the configured bandwidth parts.

Two aspects are often considered with respect to the MPR/A-MPR that is utilized to meet emissions requirements with the use of bandwidth parts. The first aspect is that the bandwidth part is not restricted to being equal to an existing carrier bandwidth, e.g., the bandwidth part need not correspond to the channel bandwidths for which MPR/A-MPR is defined. Thus, it may be the case that no MPR/A-MPR is defined corresponding to the bandwidth of the bandwidth part, e.g., bandwidth values of 5, 10, 15, 20, 25, 30, 35, 40, 45, 50, 60, 70, 80, 90, 100 MHz. If the LO is placed at the center of the channel bandwidth, then the MPR/A-MPR for the channel bandwidth can be used for any allocation within the bandwidth part or parts. For instance, if the carrier is 50 MHz and the LO is placed in the center of this 50 MHz, and if a bandwidth part is placed anywhere within the 50 MHz carrier, then the MPR/A-MPR for the 50 MHz carrier may be used for resource block (RB) allocations within the bandwidth parts. In at least some implementations the default LO location can be the center of either the configured bandwidth parts or the activated bandwidth parts. In these cases, if the configured/activated bandwidth part does not correspond to an existing channel bandwidth for which MPR/A-MPR is defined, then it is to be determined what MPR/A-MPR should be applied or allowed.

According to various implementations, if the LO is moved to the center of the configured/activated bandwidth part (e.g., not the center of the specific RB allocation as this would require the LO to be moved for each slot/subframe), then the MPR/A-MPR used to meet emissions can be less than or equal to the MPR/A-MPR used to meet emission requirements if the LO were to be placed at the center of the carrier bandwidth. For instance, when the LO is centered with respect to the center of the configured/activated bandwidth part, a frequency span of third and fifth order inter-modulations (IMs) that can interfere with adjacent channels are minimized. Thus, when the LO location is closer to the center of the configured/activated bandwidth parts than is the center of the carrier bandwidth, the same MPR/A-MPR can be applied as is allowed for the same allocation with the full channel bandwidth.

In at least some implementations, for emissions parameters for which MPR applies, the MPR for a given allocation with a smaller carrier may be greater than the MPR for a larger carrier. For example, if the allocation is an "outer" allocation for a smaller carrier and an "inner" allocation for a larger carrier, then the MPR for the smaller carrier may be greater. However, because the RB allocation may be an inner allocation for the larger carrier, the larger carrier MPR will be sufficient to meet emissions parameters.

With NS emissions requirements, there can be a significant benefit in using the A-MPR for the smaller carrier. In order for the A-MPR for the smaller carrier to apply, some general rules can be applied:
i) the smaller carrier for which the A-MPR is applied is to be centered on the LO and is to be a bandwidth for which A-MPR is defined;
ii) in order for the A-MPR to be valid, it can be assumed that the UE uses a same transmit filter for the bandwidth parts as would be used for the smaller carrier bandwidth.

It can be noted that the MPR and A-MPR applied for a given bandwidth allocation can be decoupled so that the MPR for the allocation can be taken from one carrier while the A-MPR can be taken from the other carrier. For example, the MPR can be taken from the larger carrier while the A-MPR is taken from the smaller carrier.

In current wireless systems, a gNB often has no control over the UE's placement of the LO. Thus, according to techniques described herein, given knowledge of a UE's placement of the LO, some options for determining what smaller carrier is to be used as a second source of MPR/A-MPR for a given RB allocation include:
(1) Select a smaller carrier as the smallest carrier centered at the LO of the UE which contains the activated and/or configured bandwidth parts and which is contained within the larger carrier.
(2) Select a smaller carrier as the largest carrier centered at the LO of the UE which contains the activated and/or configured bandwidth parts and which is contained within the larger carrier.
(3) Select a smaller carrier as the carrier centered at the LO of the UE which contains the activated and/or configured bandwidth parts and which is contained within the larger bandwidth and which minimizes the maximum A-MPR over the set of RB allocation within the activated and/or configured bandwidth parts.

To enable a UE to meet emissions parameters for a smaller carrier, a UE may implement the same transmitter filtering that is used for the smaller carrier. Since the network or gNB may not be able to force the UE to implement this filtering, the UE may indicate to the network if it can meet emissions parameters for the smaller carrier with the MPR/A-MPR that is allowed for the smaller carrier. Since there may exist multiple smaller carrier bandwidths centered on the LO which contain the activated and/or configured bandwidth parts and which are contained within the larger carrier, the UE may indicate which smaller carrier bandwidths for which it can meet emissions parameters with the MPR/A-MPR allowed for the corresponding smaller bandwidth carrier. Accordingly, techniques described herein introduce signaling for the UE to indicate the smaller carrier bandwidths for which the UE can meet emissions requirements with the MPR/A-MPR allowed for the corresponding smaller carrier bandwidth. In at least one implementation the described signaling can be implemented via one or more of the channel notification 116 and/or the response notification 120, described above. Examples of such signaling include:
1. Signaling to allow the UE to indicate to the network the smaller carrier bandwidths within a larger carrier bandwidth for which the UE can meet emissions parameters and additional NS emissions requirements for the smaller carrier bandwidth with the MPR/A-MPR allowed for the smaller carrier bandwidth.
2. Signaling to indicate that the UE can meet the emissions requirements for all smaller bandwidths centered on the LO which contain the indicated configured and/or activated bandwidth parts and which are contained within the larger carrier.
3. If the UE has the capability of meeting general emissions requirements and additional emissions requirements (with the corresponding allowed MPR/A-MPR) with one or more smaller bandwidth carriers centered on the UE LO and contained within the larger carrier bandwidth, the gNB may signal the smaller bandwidth carrier for which the corresponding MPR/A-MPR should be applied.
4. The network may signal that the UE should always apply the MPR/A-MPR corresponding to the smallest carrier centered on the UE LO which contains the configured and/or activated bandwidth parts and for which the UE can meet the corresponding general and additional emissions requirements with the corresponding allowed MPR/A-MPR.
5. The network may signal that the UE should always apply the MPR/A-MPR corresponding to the smaller carrier centered on the UE LO which contains the configured and/or activated bandwidth parts and for which the UE can meet the corresponding general and additional emissions requirements with the corresponding allowed MPR/A-MPR and which minimizes the maximum MPR/A-MPR over the set of RB allocations belonging to configured and/or activated bandwidth parts.

According to one or more implementations, if a bandwidth part is close to the edge of a larger carrier bandwidth and if the LO is centered within the bandwidth part, there may be no smaller carrier bandwidth centered on the LO which is contained within the larger carrier bandwidth. In this case, there are options for defining a smaller carrier containing the bandwidth part for which the MPR/A-MPR may be less.

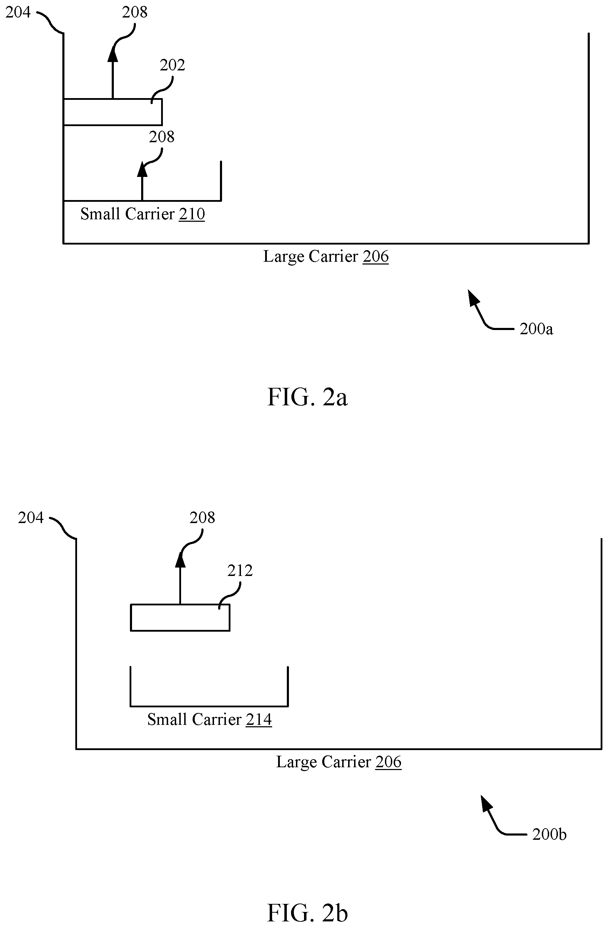

**FIG. 2a** depicts an implementation 200a where a bandwidth part 202 is positioned against an edge 204 of a large carrier 206. In this particular example, to identify a small carrier within the large carrier 206 and that includes the bandwidth part 202, an LO 208 of a UE 104 is moved away from the edge 204 of the large carrier 206 until a small carrier 210 is identified as centered on the LO 208 for which the small carrier 210 contains the bandwidth part 202 and is contained within the large carrier 206. The MPR/A-MPR for the small carrier 210 can be applied for an RB allocation within the bandwidth part 202. In at least one implementation the small carrier 210 and the LO 208 can be moved further until the edge of the bandwidth part 202 is aligned with the edge of the small carrier 210. In at least one implementation a carrier location for the small carrier 210 is used which minimizes a maximum A-MPR over RB allocations allowed within the bandwidth part. Further, in at least some implementations the LO 208 can be positioned at a center of the bandwidth part 202. For instance, MPR/A-MPR values for the small carrier 210 can be utilized even when the LO 208 is centered on the bandwidth part 202.

**FIG. 2b** depicts an implementation 200b where a bandwidth part 212 is positioned away from the edge 204 of the large carrier 206. Further, a small carrier 214 is identified that is away from the edge 204 and that contains the bandwidth part 212. In this example the LO 208 is centered within the bandwidth part 212. For instance, even though the MPR/A-MPR for the small carrier 214 is derived with the assumption that the LO 208 is at the center of the small carrier 214 bandwidth, compliance with emissions parameters may be improved as the LO 208 is moved to the center of the bandwidth part 212. For example, compliance with emissions parameters improves as the LO 208 is moved to the center of the bandwidth part since the span of emissions due to in-phase and quadrature (IQ) images and the third and fifth order power amplifier nonlinearities is reduced relative to when the LO 208 is placed in the center of the small carrier 214.

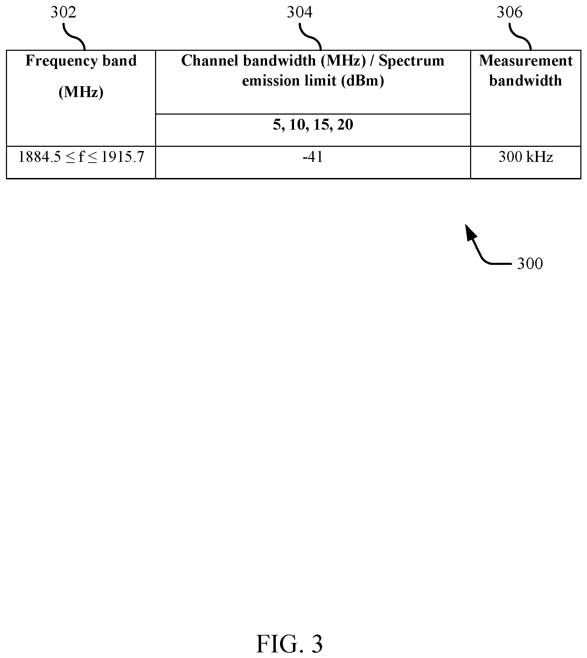

**FIGS. 3-5** depict an example scenario for reducing A-MPR for a bandwidth part with an additional emissions parameter in accordance with aspects of the present disclosure. **FIG. 3** depicts a table 300 that shows emission parameters for Band n1 when NS_05 is signaled by a wireless network (e.g., a base station 102) for use by a UE 104. The table 300 includes a frequency column 302, a bandwidth and emissions limit column 304, and a measurement bandwidth column 306. The bandwidth and emissions limit column 304 lists different channel bandwidths available for NS_05 (e.g., 5, 10, 15, 20 megahertz (MHz) and spectrum emissions limit (e.g., emissions parameter) for these bandwidths, e.g., -41 decibel-milliwatts (dBm).

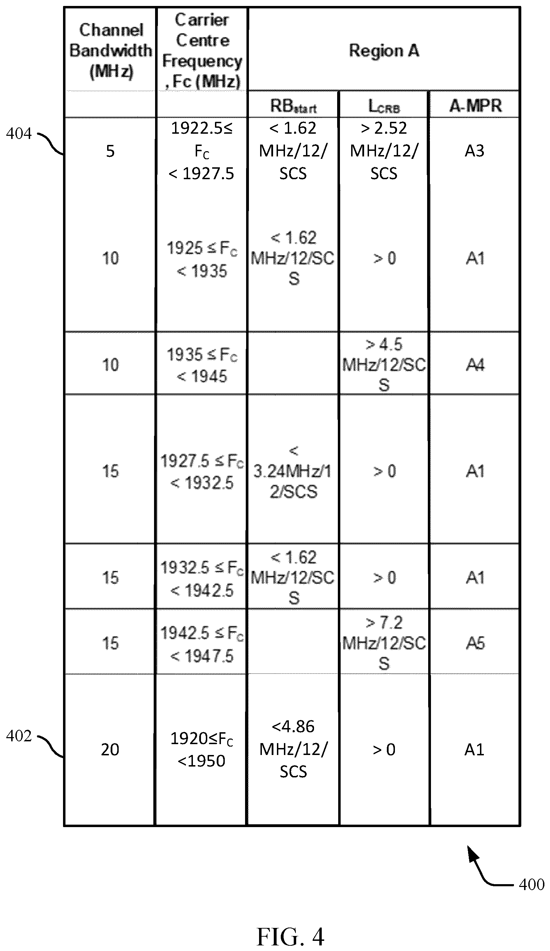

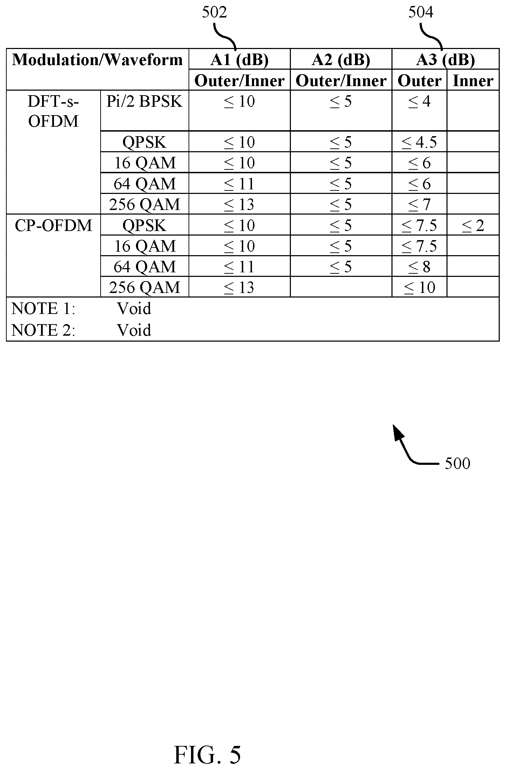

**FIG. 4** depicts a table 400 that shows the A-MPR that is allowed when NS_05 is signaled. Further, **FIG. 5** depicts a table 500 showing different A-MPR values, e.g., A1, A2, A3, etc. For instance, in the table 400, a row 402 applies for a 20 MHz carrier for which the center frequency lies in the range 1930 MHz ≤ F_{C} < 1950 MHz. As can be seen, for a RB allocation starting in the bottom 4.86 MHz of the 20 MHz carrier, the allowed A-MPR is given by A1. The A-MPR corresponding to A1 is indicated by the row 502 in the table 500. Thus, for a RB allocation starting in the bottom 4.86 MHz of the 20 MHz carrier, no less than 10 dB of A-MPR is allowed.

Now consider a 20 MHz carrier centered at 1935 MHz. As above, the A-MPR allowed for any RB allocation beginning in the bottom 4.86 MHz of the channel is given by row 502 of table 500 (A1) and is thus the allowed A-MPR is not less than 10 dB. Now consider a 5 MHz bandwidth part at the bottom of this carrier such that the center frequency of the bandwidth part is 1927.5 MHz. If the LO for the 5 MHz bandwidth part is located at 1927.5 MHz, then a row 404 in the table 400 applies which indicates an A-MPR value of A3. As shown in column 504 of table 500, no A-MPR is allowed for this bandwidth part. Thus, by utilizing implementations described herein to select a bandwidth part in the bottom 5 MHz of the 20 MHz carrier, the A-MPR is reduced from no less than 10 dB to 0 dB.

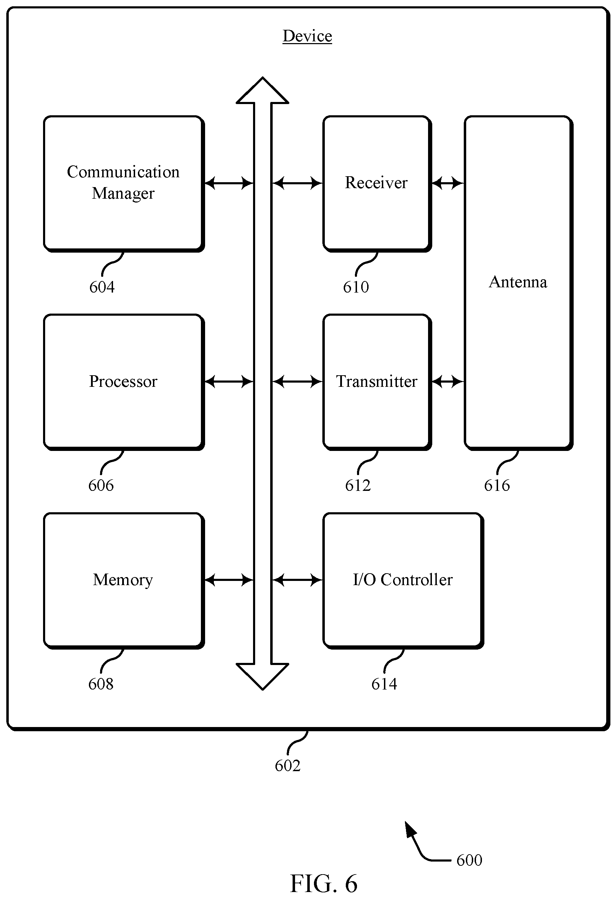

**FIG. 6** illustrates an example of a block diagram 600 of a device 602 that supports reducing A-MPR for a bandwidth part with an additional emissions parameter in accordance with aspects of the present disclosure. The device 602 may be an example of a UE 104 as described herein. The device 602 may support wireless communication with one or more base stations 102, UEs 104, or any combination thereof. The device 602 may include components for bi-directional communications including components for transmitting and receiving communications, such as a communication manager 604, a processor 606, a memory 608, a receiver 610, a transmitter 612, and an I/O controller 614. These components may be in electronic communication or otherwise coupled (e.g., operatively, communicatively, functionally, electronically, electrically) via one or more interfaces (e.g., buses).

The communication manager 604, the receiver 610, the transmitter 612, or various combinations thereof or various components thereof may be examples of means for performing various aspects of the present disclosure as described herein. For example, the communication manager 604, the receiver 610, the transmitter 612, or various combinations or components thereof may support a method for performing one or more of the functions described herein.

In some implementations, the communication manager 604, the receiver 610, the transmitter 612, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 606 and the memory 608 coupled with the processor 606 may be configured to perform one or more of the functions described herein (e.g., by executing, by the processor 606, instructions stored in the memory 608).

Additionally or alternatively, in some implementations, the communication manager 604, the receiver 610, the transmitter 612, or various combinations or components thereof may be implemented in code (e.g., as communications management software or firmware) executed by the processor 606. If implemented in code executed by the processor 606, the functions of the communication manager 604, the receiver 610, the transmitter 612, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the communication manager 604 may be configured to perform various operations (e.g., receiving, monitoring, transmitting) using or otherwise in cooperation with the receiver 610, the transmitter 612, or both. For example, the communication manager 604 may receive information from the receiver 610, send information to the transmitter 612, or be integrated in combination with the receiver 610, the transmitter 612, or both to receive information, transmit information, or perform various other operations as described herein. Although the communication manager 604 is illustrated as a separate component, in some implementations, one or more functions described with reference to the communication manager 604 may be supported by or performed by the processor 606, the memory 608, or any combination thereof. For example, the memory 608 may store code, which may include instructions executable by the processor 606 to cause the device 602 to perform various aspects of the present disclosure as described herein, or the processor 606 and the memory 608 may be otherwise configured to perform or support such operations.

For example, the communication manager 604 may support wireless communication at a first device (e.g., the device 602) in accordance with examples as disclosed herein. The communication manager 604 and/or other device components may be configured as or otherwise support a means for wireless communication at a device, including receiving, from a second device, an identifier for a first carrier bandwidth, an identifier for a location of a bandwidth part within the first carrier bandwidth, and a resource block allocation within the bandwidth part; identifying a second carrier bandwidth within the first carrier bandwidth, the second carrier bandwidth including the bandwidth part and including a value for A-MPR; and applying, for a transmission over the resource block allocation, a power reduction that is less than or equal to the value for the A-MPR associated with the second carrier bandwidth.

Additionally, wireless communication at the device includes any one or combination of: identifying the second carrier bandwidth as a smallest carrier bandwidth from a set of carrier bandwidths, the set of carrier bandwidths associated with a set of A-MPR values; identifying the second carrier bandwidth from a set of carrier bandwidths, the second carrier bandwidth having a minimum of the maximum power reduction value over the set of resource block allocations within the bandwidth part from the set of carrier bandwidths, and the set of carrier bandwidths associated with a set of A-MPR values; identifying the second carrier bandwidth from a set of carrier bandwidths associated with A-MPR values including one or more of: a carrier bandwidth centered on a local oscillator frequency of the device, the carrier bandwidth including a smallest carrier bandwidth from the set of carrier bandwidths; or a carrier bandwidth centered on the local oscillator frequency of the device, the carrier bandwidth including the resource block allocation, and the carrier bandwidth including a minimum of the maximum power reduction value over the set of resource block allocations within the bandwidth part from the set of carrier bandwidths.

Additionally, wireless communication at the device includes any one or combination of: receiving a notification from a network including one or more emissions parameters for the network and an instruction indicating to select one or more of a smallest carrier bandwidth satisfying the one or more emissions parameters, or a carrier bandwidth with a smallest power reduction value satisfying the one or more emissions parameters, and identifying the second carrier bandwidth based on the notification; receiving, from a different device, one or more emissions parameters that apply for wireless communication with the different device; and identifying the second carrier bandwidth based on the value for the A-MPR of the second carrier bandwidth satisfying the one or more emissions parameters; transmitting, to the different device, a notification indicating a capability of the device to satisfy the emissions parameters, where the notification is transmitted as part of signal transmission over the second carrier bandwidth;

Additionally, wireless communication at the device includes any one or combination of: identifying the second carrier bandwidth as a smallest carrier bandwidth that satisfies the one or more emissions parameters from a set of carrier bandwidths for which A-MPR values are defined; identifying multiple smaller carrier bandwidths from a set of smaller carrier bandwidths of the first carrier bandwidth, the set of smaller carrier bandwidths satisfying the one or more emissions parameters, and the set of smaller carrier bandwidths including A-MPR values; and identifying the second carrier bandwidth as a smaller carrier bandwidth with a smallest A-MPR value from the multiple smaller carrier bandwidths; transmitting, to the second device, a location of the second carrier bandwidth; identifying the second carrier bandwidth is further configured to adjust a local oscillator frequency of the device until the second carrier bandwidth is identified as a carrier bandwidth that is centered on the local oscillator frequency; adjusting the local oscillator frequency to be centered on the bandwidth part.

Additionally, a device for wireless communication includes a transceiver configured to receive an identifier associated with a first carrier bandwidth, an identifier for a location of a bandwidth part within the first carrier bandwidth, and a resource block allocation within the bandwidth part; and a communications manager configured to identify a second carrier bandwidth within the first carrier bandwidth, the second carrier bandwidth including the bandwidth part and including a value for A-MPR, where the transceiver is further configured to apply, for a transmission over the resource block allocation, a power reduction that is less than or equal to the value for the A-MPR associated with the second carrier bandwidth.

Additionally, the device for wireless communication includes any one or combination of: where the communications manager is configured to identify the second carrier bandwidth as a smallest carrier bandwidth from a set of carrier bandwidths, the set of carrier bandwidths associated with a set of A-MPR values; wherein the communications manager is configured to identify the second carrier bandwidth from a set of carrier bandwidths, the second carrier bandwidth having a minimum of the maximum power reduction value over the set of resource block allocations within the bandwidth part from the set of carrier bandwidths, and the set of carrier bandwidths associated with a set of A-MPR values; where the communications manager is configured to identify the second carrier bandwidth from a set of carrier bandwidths associated with A-MPR values including one or more of: a carrier bandwidth centered on a local oscillator frequency of the device, the carrier bandwidth including a smallest carrier bandwidth from the set of carrier bandwidths; or a carrier bandwidth centered on the local oscillator frequency of the device, and the carrier bandwidth including a minimum of the maximum power reduction value over the set of resource block allocations within the bandwidth part from the set of carrier bandwidths.

Additionally, the device for wireless communication includes any one or combination of: where the transceiver is further configured to receive a notification from a network including one or more emissions parameters for the network and an instruction indicating to select one or more of a smallest carrier bandwidth satisfying the one or more emissions parameters, or a carrier bandwidth with a smallest power reduction value satisfying the one or more emissions parameters, and where the communications manager is configured to identify the second carrier bandwidth based on the notification; where: the transceiver is further configured to receive, from a different device, one or more emissions parameters that apply for wireless communication with the different device; and the communications manager is further configured to identify the second carrier bandwidth based on the value for the A-MPR of the second carrier bandwidth satisfying the one or more emissions parameters; where the transceiver is further configured to transmit, to the different device, a notification indicating a capability of the device to satisfy the emissions parameters, where the notification is transmitted as part of signal transmission over the second carrier bandwidth; where the communications manager is configured to identify the second carrier bandwidth as a smallest carrier bandwidth that satisfies the one or more emissions parameters from a set of carrier bandwidths for which A-MPR values are defined.

Additionally, the device for wireless communication includes any one or combination of: where the communications manager is configured to: identify multiple smaller carrier bandwidths from a set of smaller carrier bandwidths of the first carrier bandwidth, the set of smaller carrier bandwidths satisfying the one or more emissions parameters, and the set of smaller carrier bandwidths including A-MPR values; and identify the second carrier bandwidth as a smaller carrier bandwidth with a smallest A-MPR value from the multiple smaller carrier bandwidths; where the transceiver is further configured to transmit, to the second device, a location of the second carrier bandwidth; where the communications manager configured to identify the second carrier bandwidth is further configured to adjust a local oscillator frequency of the device until the second carrier bandwidth is identified as a carrier bandwidth that is centered on the local oscillator frequency; where the communications manager is further configured to adjust the local oscillator frequency to be centered on the bandwidth part.

The processor 606 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 606 may be configured to operate a memory array using a memory controller. In some other implementations, a memory controller may be integrated into the processor 606. The processor 606 may be configured to execute computer-readable instructions stored in a memory (e.g., the memory 608) to cause the device 602 to perform various functions of the present disclosure.

The memory 608 may include random access memory (RAM) and read-only memory (ROM). The memory 608 may store computer-readable, computer-executable code including instructions that, when executed by the processor 606 cause the device 602 to perform various functions described herein. The code may be stored in a non-transitory computer-readable medium such as system memory or another type of memory. In some implementations, the code may not be directly executable by the processor 606 but may cause a computer (e.g., when compiled and executed) to perform functions described herein. In some implementations, the memory 608 may include, among other things, a basic I/O system (BIOS) which may control basic hardware or software operation such as the interaction with peripheral components or devices.

The I/O controller 614 may manage input and output signals for the device 602. The I/O controller 614 may also manage peripherals not integrated into the device 602. In some implementations, the I/O controller 614 may represent a physical connection or port to an external peripheral. In some implementations, the I/O controller 614 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 614 may be implemented as part of a processor, such as the processor 606. In some implementations, a user may interact with the device 602 via the I/O controller 614 or via hardware components controlled by the I/O controller 614.

In some implementations, the device 602 may include a single antenna 616. However, in some other implementations, the device 602 may have more than one antenna 616, which may be capable of concurrently transmitting or receiving multiple wireless transmissions. The receiver 610 and the transmitter 612 may communicate bi-directionally, via the one or more antennas 616, wired, or wireless links as described herein. For example, the receiver 610 and the transmitter 612 may represent a wireless transceiver and may communicate bi-directionally with another wireless transceiver. The transceiver may also include a modem to modulate the packets, to provide the modulated packets to one or more antennas 616 for transmission, and to demodulate packets received from the one or more antennas 616.

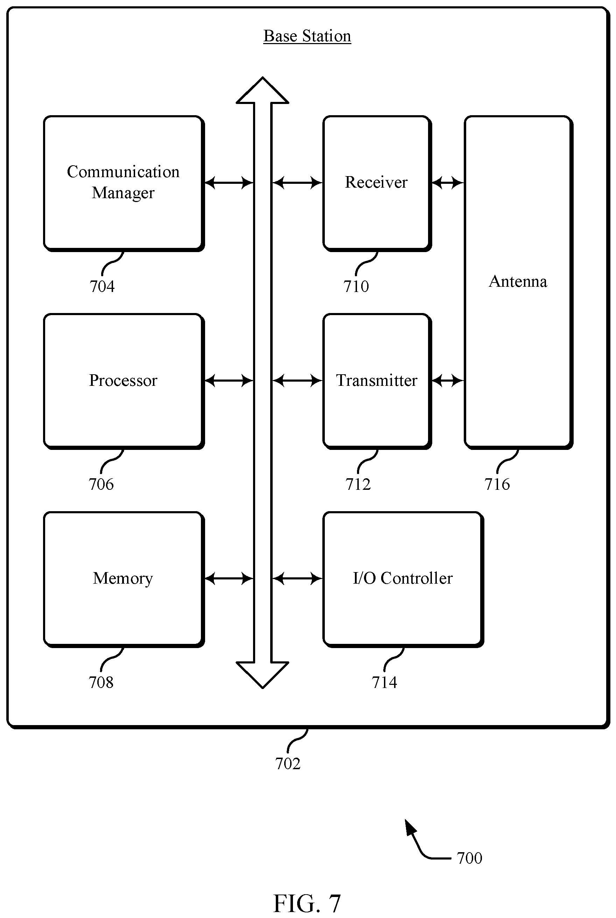

FIG. 7 illustrates an example of a block diagram 700 of a device 702 that supports reducing A-MPR for a bandwidth part with an additional emissions parameter in accordance with aspects of the present disclosure. The device 702 may be an example of a base station 102, such as a gNB as described herein. The device 702 may support wireless communication with one or more base stations 102, UEs 104, or any combination thereof. The device 702 may include components for bi-directional communications including components for transmitting and receiving communications, such as a communications manager 704, a processor 706, a memory 708, a receiver 710, a transmitter 712, and an I/O controller 714. These components may be in electronic communication or otherwise coupled (e.g., operatively, communicatively, functionally, electronically, electrically) via one or more interfaces (e.g., buses).

The communications manager 704, the receiver 710, the transmitter 712, or various combinations thereof or various components thereof may be examples of means for performing various aspects of the present disclosure as described herein. For example, the communications manager 704, the receiver 710, the transmitter 712, or various combinations or components thereof may support a method for performing one or more of the functions described herein.

In some implementations, the communications manager 704, the receiver 710, the transmitter 712, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 706 and the memory 708 coupled with the processor 706 may be configured to perform one or more of the functions described herein (e.g., by executing, by the processor 706, instructions stored in the memory 708).

Additionally or alternatively, in some implementations, the communications manager 704, the receiver 710, the transmitter 712, or various combinations or components thereof may be implemented in code (e.g., as communications management software or firmware) executed by the processor 706. If implemented in code executed by the processor 706, the functions of the communications manager 704, the receiver 710, the transmitter 712, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the communications manager 704 may be configured to perform various operations (e.g., receiving, monitoring, transmitting) using or otherwise in cooperation with the receiver 710, the transmitter 712, or both. For example, the communications manager 704 may receive information from the receiver 710, send information to the transmitter 712, or be integrated in combination with the receiver 710, the transmitter 712, or both to receive information, transmit information, or perform various other operations as described herein. Although the communications manager 704 is illustrated as a separate component, in some implementations, one or more functions described with reference to the communications manager 704 may be supported by or performed by the processor 706, the memory 708, or any combination thereof. For example, the memory 708 may store code, which may include instructions executable by the processor 706 to cause the device 702 to perform various aspects of the present disclosure as described herein, or the processor 706 and the memory 708 may be otherwise configured to perform or support such operations.

For example, the communications manager 704 may support wireless communication at a first device (e.g., the base station as device 702) in accordance with examples as disclosed herein. The communications manager 704 and/or other device components may be configured as or otherwise support a means for wireless communication at a base station, including determining, at a first device and based on a location of a local oscillator frequency of a second device, a first carrier bandwidth within a second, larger carrier bandwidth, the first carrier bandwidth including a value for A-MPR; generating one or more notifications that identify the first carrier bandwidth, the second carrier bandwidth, a bandwidth part within the first carrier bandwidth, and a resource block allocation within the bandwidth part; and communicating the one or more notifications to the second device for configuring wireless communication between the first device and the second device.

Additionally, wireless communication at the base station includes any one or combination of: receiving a notification of the local oscillator frequency from a transmission from the second device; where determining the first carrier bandwidth includes identifying the first carrier bandwidth as a carrier bandwidth that is centered on the local oscillator frequency and that is within the second carrier bandwidth; where the one or more notifications further identify one or more emissions parameters for communication in the first carrier bandwidth, and receiving a notification from the second device that the second device is configured to satisfy the one or more emissions parameters as part of transmission using the first carrier bandwidth; transmitting one or more emissions parameters for wireless communication with the first device, and receiving from the second device identifiers for multiple carrier bandwidths for which the second device is able to satisfy the one or more emissions parameters; and selecting the first carrier bandwidth from the multiple carrier bandwidths.

Additionally, a base station for wireless communication includes a communications manager configured to: determine, based on a location of a local oscillator frequency of a second device, a first carrier bandwidth within a second, larger carrier bandwidth, the first carrier bandwidth including a value for A-MPR; and generate one or more notifications that identify the first carrier bandwidth, the second carrier bandwidth, a bandwidth part within the first carrier bandwidth, and a resource block allocation within the bandwidth part; and a transceiver configured to communicate the one or more notifications to the second device for configuring wireless communication between the base station and the second device.

Additionally, the base station for wireless communication includes any one or combination of: where the transceiver is further configured to receive a notification of the local oscillator frequency from a transmission from the second device; where to determine the first carrier bandwidth by the communications manager includes to identify the first carrier bandwidth as a carrier bandwidth that is centered on the local oscillator frequency and that is within the second carrier bandwidth; where the one or more notifications further identify one or more emissions parameters for communication in the first carrier bandwidth, and where the transceiver is further configured to receive a notification from the second device that the second device is configured to satisfy the one or more emissions parameters as part of transmission using the first carrier bandwidth; where: the transceiver is configured to transmit one or more emissions parameters for wireless communication with the base station, and receive from the second device identifiers for multiple carrier bandwidths for which the second device is able to satisfy the one or more emissions parameters; and the communications manager is further configured to select the first carrier bandwidth from the multiple carrier bandwidths.

The processor 706 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 706 may be configured to operate a memory array using a memory controller. In some other implementations, a memory controller may be integrated into the processor 706. The processor 706 may be configured to execute computer-readable instructions stored in a memory (e.g., the memory 708) to cause the device 702 to perform various functions of the present disclosure.

The memory 708 may include random access memory (RAM) and read-only memory (ROM). The memory 708 may store computer-readable, computer-executable code including instructions that, when executed by the processor 706 cause the device 702 to perform various functions described herein. The code may be stored in a non-transitory computer-readable medium such as system memory or another type of memory. In some implementations, the code may not be directly executable by the processor 706 but may cause a computer (e.g., when compiled and executed) to perform functions described herein. In some implementations, the memory 708 may include, among other things, a basic I/O system (BIOS) which may control basic hardware or software operation such as the interaction with peripheral components or devices.

The I/O controller 714 may manage input and output signals for the device 702. The I/O controller 714 may also manage peripherals not integrated into the device 702. In some implementations, the I/O controller 714 may represent a physical connection or port to an external peripheral. In some implementations, the I/O controller 714 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 714 may be implemented as part of a processor, such as the processor 706. In some implementations, a user may interact with the device 702 via the I/O controller 714 or via hardware components controlled by the I/O controller 714.

In some implementations, the device 702 may include a single antenna 716. However, in some other implementations, the device 702 may have more than one antenna 716, which may be capable of concurrently transmitting or receiving multiple wireless transmissions. The receiver 710 and the transmitter 712 may communicate bi-directionally, via the one or more antennas 716, wired, or wireless links as described herein. For example, the receiver 710 and the transmitter 712 may represent a wireless transceiver and may communicate bi-directionally with another wireless transceiver. The transceiver may also include a modem to modulate the packets, to provide the modulated packets to one or more antennas 716 for transmission, and to demodulate packets received from the one or more antennas 716.

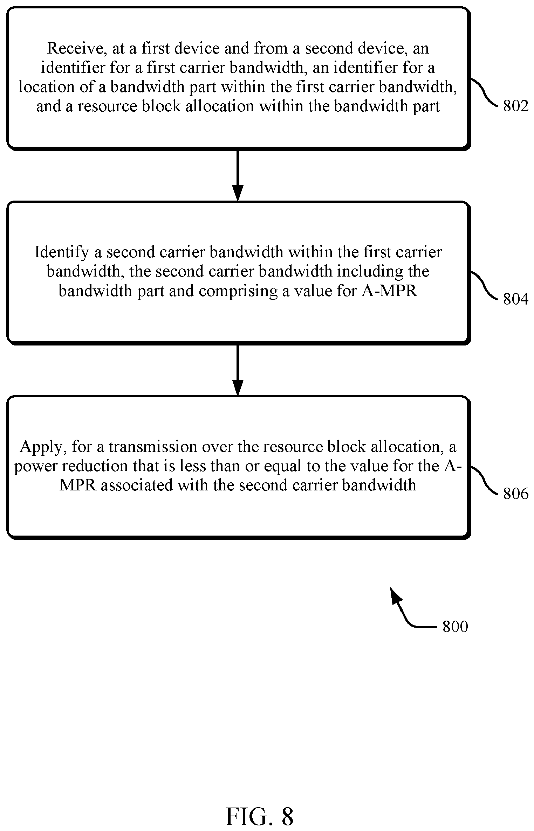

FIG. 8 illustrates a flowchart of a method 800 that supports reducing A-MPR for a bandwidth part with an additional emissions parameter in accordance with aspects of the present disclosure. The operations of the method 800 may be implemented by a device or its components as described herein. For example, the operations of the method 800 may be performed by a device, such as a UE 104 as described with reference to FIGS. 1 through 7. In some implementations, the device may execute a set of instructions to control the function elements of the device to perform the described functions. Additionally, or alternatively, the device may perform aspects of the described functions using special-purpose hardware.

At 802, the method may include receiving, at a first device and from a second device, an identifier for a first carrier bandwidth, an identifier for a location of a bandwidth part within the first carrier bandwidth, and a resource block allocation within the bandwidth part. The operations of 802 may be performed in accordance with examples as described herein. In some implementations, aspects of the operations of 802 may be performed by a device as described with reference to FIG. 1.

At 804, the method may include identifying a second carrier bandwidth within the first carrier bandwidth, the second carrier bandwidth including the bandwidth part and comprising a value for A-MPR. The operations of 804 may be performed in accordance with examples as described herein. In some implementations, aspects of the operations of 804 may be performed by a device as described with reference to FIG. 1.

At 806, the method may include applying, for a transmission over the resource block allocation, a power reduction that is less than or equal to the value for the A-MPR associated with the second carrier bandwidth. The operations of 806 may be performed in accordance with examples as described herein. In some implementations, aspects of the operations of 806 may be performed by a device as described with reference to FIG. 1.

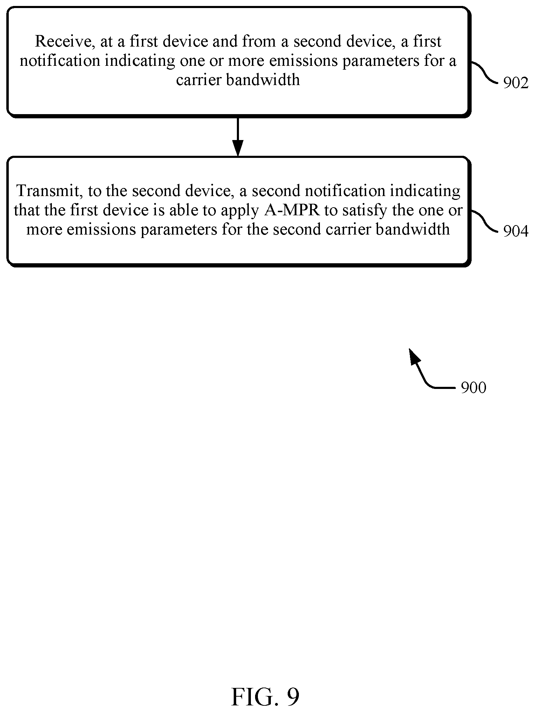

**FIG. 9** illustrates a flowchart of a method 900 that supports reducing A-MPR for a bandwidth part with an additional emissions parameter in accordance with aspects of the present disclosure. The operations of the method 900 may be implemented by a device or its components as described herein. For example, the operations of the method 900 may be performed by a device, such as a UE 104 as described with reference to FIGS. 1 through 7. In some implementations, the device may execute a set of instructions to control the function elements of the device to perform the described functions. Additionally, or alternatively, the device may perform aspects of the described functions using special-purpose hardware.

At 902, the method may include receiving, at a first device and from a second device, a first notification indicating one or more emissions parameters for a carrier bandwidth. The operations of 902 may be performed in accordance with examples as described herein. In some implementations, aspects of the operations of 902 may be performed by a device as described with reference to FIG. 1.

At 904, the method may include transmitting, to the second device, a second notification indicating that the first device is able to apply A-MPR to satisfy the one or more emissions parameters for the second carrier bandwidth. The operations of 904 may be performed in accordance with examples as described herein. In some implementations, aspects of the operations of 904 may be performed by a device as described with reference to FIG. 1.

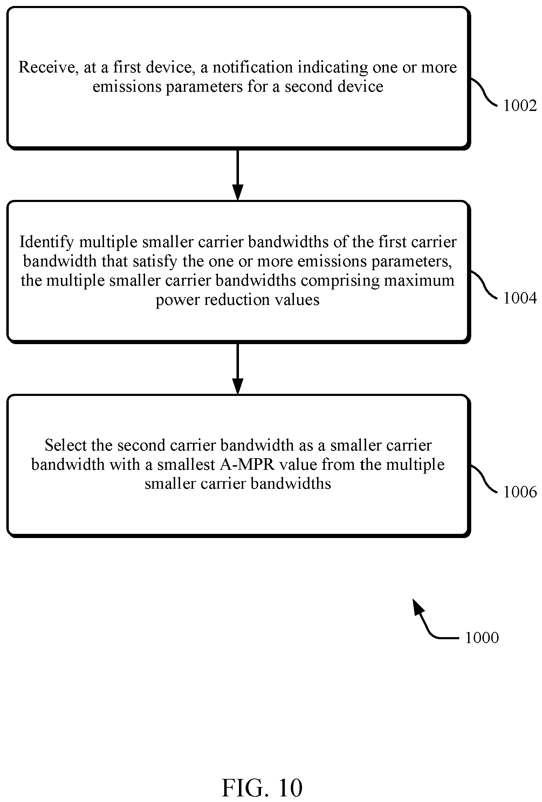

**FIG. 10** illustrates a flowchart of a method 1000 that supports reducing A-MPR for a bandwidth part with an additional emissions parameter in accordance with aspects of the present disclosure. The operations of the method 1000 may be implemented by a device or its components as described herein. For example, the operations of the method 1000 may be performed by a device, such as a UE 104 as described with reference to FIGS. 1 through 7. In some implementations, the device may execute a set of instructions to control the function elements of the device to perform the described functions. Additionally, or alternatively, the device may perform aspects of the described functions using special-purpose hardware.

At 1002, the method may include receiving, at a first device, a notification indicating one or more emissions parameters for a second device. The operations of 1002 may be performed in accordance with examples as described herein. In some implementations, aspects of the operations of 1002 may be performed by a device as described with reference to FIG. 1.

At 1004, the method may include identifying multiple smaller carrier bandwidths of the first carrier bandwidth that satisfy the one or more emissions parameters, the multiple smaller carrier bandwidths comprising maximum power reduction values. The operations of 1004 may be performed in accordance with examples as described herein. In some implementations, aspects of the operations of 1004 may be performed by a device as described with reference to FIG. 1.

At 1006, the method may include selecting the second carrier bandwidth as a smaller carrier bandwidth with a smallest A-MPR value from the multiple smaller carrier bandwidths. The operations of 1006 may be performed in accordance with examples as described herein. In some implementations, aspects of the operations of 1006 may be performed by a device as described with reference to FIG. 1.

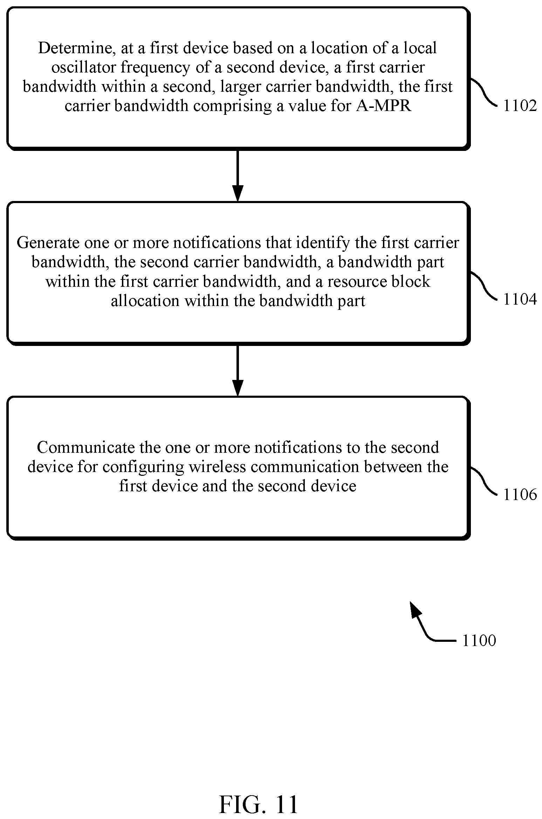

**FIG. 11** illustrates a flowchart of a method 1100 that supports reducing A-MPR for a bandwidth part with an additional emissions parameter in accordance with aspects of the present disclosure. The operations of the method 1100 may be implemented by a device or its components as described herein. For example, the operations of the method 1100 may be performed by a device, such as a base station 102 as described with reference to FIGS. 1 through 7. In some implementations, the device may execute a set of instructions to control the function elements of the device to perform the described functions. Additionally, or alternatively, the device may perform aspects of the described functions using special-purpose hardware.

At 1102, the method may include determining, at a first device based on a location of a local oscillator frequency of a second device, a first carrier bandwidth within a second, larger carrier bandwidth, the first carrier bandwidth comprising a value for A-MPR. The operations of 1102 may be performed in accordance with examples as described herein. In some implementations, aspects of the operations of 1102 may be performed by a device as described with reference to FIG. 1.

At 1104, the method may include generating one or more notifications that identify the first carrier bandwidth, the second carrier bandwidth, a bandwidth part within the first carrier bandwidth, and a resource block allocation within the bandwidth part. The operations of 1104 may be performed in accordance with examples as described herein. In some implementations, aspects of the operations of 1104 may be performed by a device as described with reference to FIG. 1.

At 1106, the method may include communicating the one or more notifications to the second device for configuring wireless communication between the first device and the second device. The operations of 1106 may be performed in accordance with examples as described herein. In some implementations, aspects of the operations of 1106 may be performed by a device as described with reference to FIG. 1.

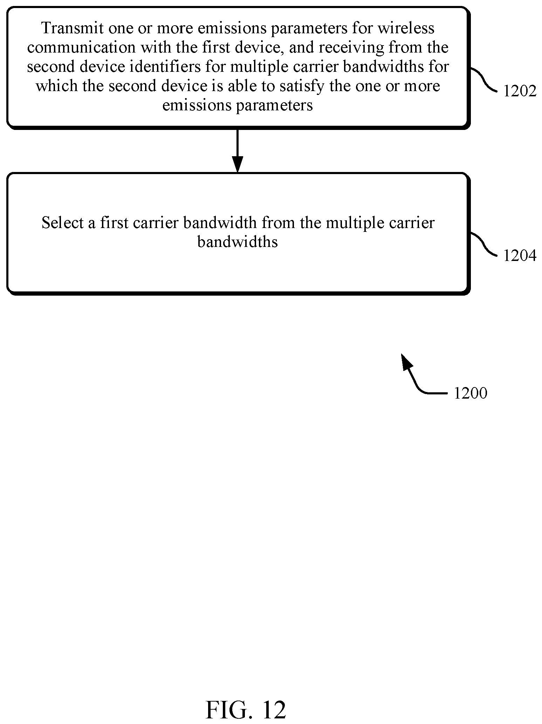

**FIG. 12** illustrates a flowchart of a method 1200 that supports reducing A-MPR for a bandwidth part with an additional emissions parameter in accordance with aspects of the present disclosure. The operations of the method 1200 may be implemented by a device or its components as described herein. For example, the operations of the method 1200 may be performed by a device, such as a base station 102 as described with reference to FIGS. 1 through 7. In some implementations, the device may execute a set of instructions to control the function elements of the device to perform the described functions. Additionally, or alternatively, the device may perform aspects of the described functions using special-purpose hardware.

At 1202, the method may include transmitting one or more emissions parameters for wireless communication with the first device, and receiving from the second device identifiers for multiple carrier bandwidths for which the second device is able to satisfy the one or more emissions parameters. The operations of 1202 may be performed in accordance with examples as described herein. In some implementations, aspects of the operations of 1202 may be performed by a device as described with reference to FIG. 1.

At 1204, the method may include select a first carrier bandwidth from the multiple carrier bandwidths. The operations of 1204 may be performed in accordance with examples as described herein. In some implementations, aspects of the operations of 1204 may be performed by a device as described with reference to FIG. 1.

It should be noted that the methods described herein describe possible implementations, and that the operations and the steps may be rearranged or otherwise modified and that other implementations are possible. Further, aspects from two or more of the methods may be combined. The order in which the methods are described is not intended to be construed as a limitation, and any number or combination of the described method operations can be performed in any order to perform a method, or an alternate method.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

Further aspects of the present disclosure are provided by the subject matter of the following numbered clauses:
Clause 1. A device for wireless communication, the device comprising: a transceiver configured to receive an identifier associated with a first carrier bandwidth, an identifier for a location of a bandwidth part within the first carrier bandwidth, and a resource block allocation within the bandwidth part; and a communications manager configured to identify a second carrier bandwidth within the first carrier bandwidth, the second carrier bandwidth including the bandwidth part and comprising a value for additional maximum power reduction, wherein the transceiver is further configured to apply, for a transmission over the resource block allocation, a power reduction that is less than or equal to the value for the additional maximum power reduction associated with the second carrier bandwidth.
Clause 2. The device of clause 1, wherein the communications manager is configured to identify the second carrier bandwidth as a smallest carrier bandwidth from a set of carrier bandwidths, the set of carrier bandwidths associated with a set of additional maximum power reduction values.
Clause 3. The device of clause 1, wherein the communications manager is configured to identify the second carrier bandwidth from a set of carrier bandwidths, the second carrier bandwidth having a minimum of the maximum power reduction value over a set of resource block allocations within the bandwidth part from the set of carrier bandwidths, and the set of carrier bandwidths associated with a set of additional maximum power reduction values.
Clause 4. The device of clause 1, wherein the communications manager is configured to identify the second carrier bandwidth from a set of carrier bandwidths associated with additional maximum power reduction values comprising one or more of: a carrier bandwidth centered on a local oscillator frequency of the device, the carrier bandwidth including a smallest carrier bandwidth from the set of carrier bandwidths; or a carrier bandwidth centered on the local oscillator frequency of the device, the carrier bandwidth including the resource block allocation, and the carrier bandwidth including a minimum of the maximum power reduction value over the set of resource block allocations within the bandwidth part from the set of carrier bandwidths.
Clause 5. The device of clause 4, wherein the transceiver is further configured to receive a notification from a network including one or more emissions parameters for the network and an instruction indicating to select one or more of a smallest carrier bandwidth satisfying the one or more emissions parameters, or a carrier bandwidth with a smallest power reduction value satisfying the one or more emissions parameters, and wherein the communications manager is configured to identify the second carrier bandwidth based on the notification.
Clause 6. The device of clause 1, wherein: the transceiver is further configured to receive, from a different device, one or more emissions parameters that apply for wireless communication with the different device; and the communications manager is further configured to identify the second carrier bandwidth based on the value for the additional maximum power reduction of the second carrier bandwidth satisfying the one or more emissions parameters.
Clause 7. The device of clause 6, wherein the transceiver is further configured to transmit, to the different device, a notification indicating a capability of the device to satisfy the emissions parameters, wherein the notification is transmitted as part of signal transmission over the second carrier bandwidth.
Clause 8. The device of clause 6, wherein the communications manager is configured to identify the second carrier bandwidth as a smallest carrier bandwidth that satisfies the one or more emissions parameters from a set of carrier bandwidths for which additional maximum power reduction values are defined.
Clause 9. The device of clause 6, wherein the communications manager is configured to: identify multiple smaller carrier bandwidths from a set of smaller carrier bandwidths of the first carrier bandwidth, the set of smaller carrier bandwidths satisfying the one or more emissions parameters, and the set of smaller carrier bandwidths comprising additional maximum power reduction values; and identify the second carrier bandwidth as a smaller carrier bandwidth with a smallest additional maximum power reduction value from the multiple smaller carrier bandwidths.
Clause 10. The device of clause 9, wherein the transceiver is further configured to transmit, to the second device, a location of the second carrier bandwidth.
Clause 11. The device of clause 1, wherein the communications manager configured to identify the second carrier bandwidth is further configured to adjust a local oscillator frequency of the device until the second carrier bandwidth is identified as a carrier bandwidth that is centered on the local oscillator frequency.
Clause 12. The device of clause 11, wherein the communications manager is further configured to adjust the local oscillator frequency to be centered on the bandwidth part.
Clause 13. A first device for wireless communication, the device comprising: a communications manager configured to: determine, based on a location of a local oscillator frequency of a second device, a first carrier bandwidth within a second, larger carrier bandwidth, the first carrier bandwidth comprising a value for additional maximum power reduction; and generate one or more notifications that identify the first carrier bandwidth, the second carrier bandwidth, a bandwidth part within the first carrier bandwidth, and a resource block allocation within the bandwidth part; and a transceiver configured to communicate the one or more notifications to the second device for configuring wireless communication between the first device and the second device.
Clause 14. The first device of clause 13, wherein the transceiver is further configured to receive a notification of the local oscillator frequency from a transmission from the second device.
Clause 15. The first device of clause 13, wherein to determine the first carrier bandwidth by the communications manager includes to identify the first carrier bandwidth as a carrier bandwidth that is centered on the local oscillator frequency and that is within the second carrier bandwidth.
Clause 16. The first device of clause 13, wherein the one or more notifications further identify one or more emissions parameters for communication in the first carrier bandwidth, and wherein the transceiver is further configured to receive a notification from the second device that the second device is configured to satisfy the one or more emissions parameters as part of transmission using the first carrier bandwidth.
Clause 17. The first device of clause 13, wherein: the transceiver is configured to transmit one or more emissions parameters for wireless communication with the first device, and receive from the second device identifiers for multiple carrier bandwidths for which the second device is able to satisfy the one or more emissions parameters; and the communications manager is further configured to select the first carrier bandwidth from the multiple carrier bandwidths.
Clause 18. A method for wireless communication at a first device, the method comprising: receiving, from a second device, an identifier for a first carrier bandwidth, an identifier for a location of a bandwidth part within the first carrier bandwidth, and a resource block allocation within the bandwidth part; identifying a second carrier bandwidth within the first carrier bandwidth, the second carrier bandwidth including the bandwidth part and comprising a value for additional maximum power reduction; and applying, for a transmission over the resource block allocation, a power reduction that is less than or equal to the value for the additional maximum power reduction associated with the second carrier bandwidth.
Clause 19. The method of clause 18, further comprising: receiving, at the first device, a first notification indicating one or more emissions parameters for the second carrier bandwidth; and transmitting, to the second device, a second notification indicating that the first device is able to apply additional maximum power reduction to satisfy the one or more emissions parameters for the second carrier bandwidth.
Clause 20. The method of clause 18, further comprising: receiving, at the first device, a notification indicating one or more emissions parameters for the second device; identifying multiple smaller carrier bandwidths of the first carrier bandwidth that satisfy the one or more emissions parameters, the multiple smaller carrier bandwidths comprising maximum power reduction values; and selecting the second carrier bandwidth as a smaller carrier bandwidth with a smallest additional maximum power reduction value from the multiple smaller carrier bandwidths.

## Claims

1. A user equipment, UE, for wireless communication, comprising:
at least one memory; and
at least one processor coupled with the at least one memory and configured to cause the UE to:
receive a resource block allocation, wherein:
the resource block allocation is an outer allocation for a first carrier bandwidth for which a first maximum power reduction applies;
the resource block allocation is an inner allocation for a second carrier bandwidth for which a second maximum power reduction applies;
the second carrier bandwidth is larger than the first carrier bandwidth; and
the second maximum power reduction is less than the first maximum power reduction.

2. The UE of claim 1, wherein the at least one processor is configured to cause the UE to:
apply, for a transmission over the resource block allocation, a power reduction less than the second maximum power reduction.

3. The UE of claim 1 or claim 2, wherein the at least one processor is configured to cause the UE to receive the resource block allocation in a channel notification comprising an identifier of the first carrier bandwidth.

4. The UE of claim 3, wherein the channel notification comprises an identifier for a location of a bandwidth part within the first carrier bandwidth.

5. The UE of claim 4, wherein the at least one processor is configured to cause the UE to identify the second carrier bandwidth within the first carrier bandwidth.

6. The UE of any one of claims 3 to 5, wherein the channel notification comprises an emission parameter.

7. The UE of claim 6, wherein the at least one processor is configured to cause the UE to generate a response notification that indicates whether the UE is able to satisfy the emission parameter for a bandwidth part signalled as part of the channel notification.

8. A method for wireless communication performed by a user equipment, UE, the method comprising:
receiving a resource block allocation, wherein:
the resource block allocation is an outer allocation for a first carrier bandwidth for which a first maximum power reduction applies;
the resource block allocation is an inner allocation for a second carrier bandwidth for which a second maximum power reduction applies;
the second carrier bandwidth is larger than the first carrier bandwidth; and
the second maximum power reduction is less than the first maximum power reduction.

9. A base station for wireless communication, comprising:
at least one memory; and
at least one processor coupled with the at least one memory and configured to cause the base station to:
transmit a resource block allocation, wherein:
the resource block allocation is an outer allocation for a first carrier bandwidth for which a first maximum power reduction applies;
the resource block allocation is an inner allocation for a second carrier bandwidth for which a second maximum power reduction applies;
the second carrier bandwidth is larger than the first carrier bandwidth; and
the second maximum power reduction is less than the first maximum power reduction.

10. The base station of claim 9, wherein the at least one processor is configured to cause the base station to transmit the resource block allocation in a channel notification comprising an identifier of the first carrier bandwidth.

11. The base station of claim 10, wherein the channel notification comprises an identifier for a location of a bandwidth part within the first carrier bandwidth.

12. The base station of claim 10 or claim 11, wherein the channel notification comprises an emission parameter.

13. The base station of claim 12, wherein the at least one processor is configured to cause the base station to receive a response notification that indicates whether a user equipment is able to satisfy the emission parameter for a bandwidth part signalled as part of the channel notification.

14. A method for wireless communication performed by a base station, comprising:
transmitting a resource block allocation, wherein:
the resource block allocation is an outer allocation for a first carrier bandwidth for which a first maximum power reduction applies;
the resource block allocation is an inner allocation for a second carrier bandwidth for which a second maximum power reduction applies;
the second carrier bandwidth is larger than the first carrier bandwidth; and
the second maximum power reduction is less than the first maximum power reduction.

15. A processor for wireless communication, comprising:
a controller coupled with at least one memory and configured to cause the processor to:
receive a resource block allocation, wherein:
the resource block allocation is an outer allocation for a first carrier bandwidth for which a first maximum power reduction applies;
the resource block allocation is an inner allocation for a second carrier bandwidth for which a second maximum power reduction applies;
the second carrier bandwidth is larger than the first carrier bandwidth; and
the second maximum power reduction is less than the first maximum power reduction.
